(19) Europäisches Patentamt
European Patent Office
Office européen des brevets

(11) **EP 2 485 516 B1**

(12) **EUROPEAN PATENT SPECIFICATION**

(45) Date of publication and mention
of the grant of the patent:
**02.05.2018 Bulletin 2018/18**

(51) Int Cl.:
*H04W 16/08* (2009.01)          *H04W 52/32* (2009.01)
*H04W 84/04* (2009.01)

(21) Application number: **11290047.7**

(22) Date of filing: **27.01.2011**

(54) **Radio coverage in mobile telecommunications systems**

Funkabdeckung in mobilen Telekommunikationssystemen

Couverture radio dans un système de télécommunication radio

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.08.2012 Bulletin 2012/32**

(73) Proprietor: **Alcatel Lucent
91620 Nozay (FR)**

(72) Inventors:
• **Ashraf, Imran
Swindon
Wiltshire SN5 5AA (GB)**
• **Ho, Lester
Swindon
Wiltshire SN5 5GD (GB)**

(74) Representative: **Browne, Robin Forsythe et al
Hepworth Browne
15 St Paul's Street
Leeds LS1 2JG (GB)**

(56) References cited:
**WO-A1-00/72618      WO-A1-2010/039906**

• **ASHRAF I ET AL: "Distributed Radio Coverage
Optimization in Enterprise Femtocell Networks",
COMMUNICATIONS (ICC), 2010 IEEE
INTERNATIONAL CONFERENCE ON, IEEE,
PISCATAWAY, NJ, USA, 23 May 2010
(2010-05-23), pages 1-6, XP031702971, ISBN:
978-1-4244-6402-9**

## Description

Field of the Invention

The present invention relates to mobile telecommunications systems, and in particular to radio coverage of cells within a system.

Background Art

The radio coverage optimization of base stations (BSs) is an important element in improving the overall performance of small cell networks (SCNs). "Coverage" refers to the geographical area in which transmission signals from the Base Station may be detected by users (User Equipment - UE- in UMTS) within the cell. Small cells such as microcells, picocells, and in particular femtocells, are cells much smaller in dimensions than macrocells, macrocells usually having dimensions of kilometres, whereas small cells such as femtocells may have dimensions of tens of meters. A SCN with optimized coverage may yield higher end-user data rates and improved Quality-of-Service (QoS) experience. Optimisation in general involves balancing various factors and requirements so as to achieve a resultant coverage which is a reasonable compromise between them.

Currently employed processes for coverage optimization in UMTS wireless cellular networks mostly employ centralized computation approaches, and are aimed at the initial configuration or subsequent optimisation of a large scale network of macrocells, see for example: D. Fagen, P.A. Vicharelli, J. Weitzen, " Automated Wireless Coverage Optimization With Controlled Overlap," IEEE Transactions on Vehicular Technology, vol. 57, no. 4, pp. 2395-2403, Jul 2008.; I. Siomina, P. Värbrand, D. Yuan, "Automated Optimization of Service Coverage and Base Station Antenna Configuration in UMTS Networks," IEEE Wireless Communications, vol. 13, no. 6, pp. 16-25, Dec 2006. Such processes involve the calculation of optimal parameters, such as the number of BSs, ideal BS locations, pilot channel transmit powers, antenna configurations, at a central server running an optimization procedure. The configuration statistics of the whole network are passed on to the central entity, which then computes the optimal/quasi-optimal configuration settings.

However, with the emerging small cell networks (SCNs), such as femtocells and clustered sensor networks, the deployment scenarios exhibit much more randomness. The concept of precise pre-rollout network planning becomes difficult to follow as the deployments could follow random plug-and-play patterns of Base Station Routers, which are connected to broadband connections by the users. This phenomenon, coupled with the expected large scale deployment of such networks, prohibits the use of central global knowledge-based procedures.

A quasi-distributed/ decentralised coverage optimization process has been presented in Ashraf, H.

Claussen, L.T.W. Ho, "Distributed Radio Coverage Optimization in Enterprise Femtocell Networks," in Proc. IEEE ICC, Cape Town South Africa, 23-27 May 2010. In this process, traffic load and UE measurement reports are exchanged between all neighbouring BSs in a group of N Femtocells. An update on pilot channel transmit power is made for each BS in turn, based on a process involving calculating the average load (number of users) of the BSs. However this approach involves gathering local status information of the BSs, and may cause the backhaul signalling load to increase significantly as a function of the number of small cells in the cluster. In terms of Femtocells, increased backhaul signalling load means increased traffic on local broadband connections to the BSs of the Femtocells.

WO 00/72618 describes a cell load sharing scheme, which is a centralised computation approach, with the disadvantages pointed out above. A Base Station Controller or Mobile Switching Center (BSC or MSC) coordinates and collects results from all cells. A mobile station MS distribution list is generated and this is split into a distribution list for each cell. There are two load thresholds - first traffic load threshold in the subject cell, second traffic load threshold in a neighbouring cell, above which cell load sharing is accepted. If there is high traffic in a cell, then it is determined whether traffic in a neighbouring cell is lower than the second threshold. The neighbouring cell with the highest signal strength measurements is selected. The coverage of this neighbouring cell is accordingly increased, while the coverage of the subject cell is decreased.

Summary of the Invention

The present invention provides a method as defined by claim 1. The above steps of determining the number of users, monitoring signal reports, and adjusting transmission parameters of the base cell are steps which may be carried out by measurements and data available within the cell, and do not require transfer of information between neighbouring cells on a backhaul connection. Therefore a fully decentralised or distributed procedure for the telecommunications system may be provided, since each cell of the system does not require information from other external sources for its operation. Further the method is applicable to any number of cells, one or more, and does not require the initial definition of a cluster of N cells, in order to carry out defined procedures, in contrast to the prior art referred to above.

In a further aspect, the invention provides a base station as defined in claim 7. Said mobile telecommunications system may be of any known type, in use or envisaged, e.g., GSM, GSM/EDGE, UMTS, WCDMA, HSPA, 3GPP, LTE, 4G.

In an embodiment, a consideration is that in the case where a base station is overloaded, only those users which are in a position to be handed over to a neighbouring cell may be dropped. Dropping is caused by adjusting transmission parameters of the base station, preferably by reducing the power of a pilot signal (CPICH in UMTS) so as to shrink somewhat the area of coverage of the cell. However care must be exercised to avoid dropping by this procedure, an excessive number of users, and users that cannot be handed over to a neighbouring cell, and this leads to further technical features as described below.

A large number of different types of measurements are reported from a user to a base station during operation, depending on the particular system employed, and many of these signals might conceivably be used in the invention (to initiate a specific measurement, a 'measurement control message' is transmitted to the user, and when reporting criteria are fulfilled, the user answers with a 'measurement report message' to the BS). However those signal reports that are directly relevant to handover procedures are desirably used. In the case of UMTS, handover is usually on the basis of signal reports of the power of the pilot signal CPICH. However in other systems e.g. GSM other criteria may be used, e.g. Bit Error Rate. Whilst in the specific embodiment described below, procedures employ pilot signal strength measurements, it will be understood these procedures may employ other signal reports, where appropriate.

In UMTS, whilst reduction of the power of the pilot signal is preferably used for dropping excess users, other transmission parameters may be used. For example handover is commonly determined on the basis of a neighbouring cell having a stronger pilot signal than the current home cell. However a transmission power margin, offset or hysteresis value is factored into handover calculation to prevent unstable handover conditions, and this value might be altered for radio coverage adjustment. The measurements made and signals transmitted by user equipment (UE) are defined for UMTS in Technical Standard 3GPP 25.215, Section 5. In particular CPICH RSCP is used in cell reselection and handovers. Cell reselection procedures are defined in Technical Standard 3GPP 25.304. In cell handover and reselection procedures, user equipment (UE) continuously scans neighbouring cells. The UE undergoes a synchronization procedure with each detected cell, and may then measure pilot signal strength for the cell, and identify the cell.

Said candidate users, which form a group, are regarded as the number of users reporting received pilot signals from at least two BSs. Determinations are made of the pilot signal strength difference between the strongest BS pilot signal (which is normally the home BS) and the next strongest BS pilot signal. These values are stored in an array, together with an identification of the respective users, and ranked or ordered in ascending order, with the smallest signal strength difference first (the prime candidate for handover). When a determination is made of the overload number of users overloading the BS, this number is compared with the number of candidate users. If the number of candidate users is less than or equal to the number of overload users, then a decision is made to reduce pilot signal strength of the home BS by an amount dependent on the largest signal strength difference of the candidate users (the last element in the array), so as to drop all candidate users.

If however the number of candidate users is greater than the number of overload users, then care must be exercised not to drop an excessive number of users. Therefore a sub-group within the group of candidate users is formed equal in number to the number of overload users, the users in the sub-group having smaller signal strength differences than those of the remainder of the candidate users in the array. A check is made whether the largest signal strength difference of the sub-group is the same as the smallest signal strength difference of the remainder, and if so, an iterative procedure is carried out, wherein the sub-group is decremented in number, the decrement being added to the remainder, and the check repeated, until the largest signal strength difference of the sub-group is less than any of the signal strength differences of the remainder. When this is achieved, the pilot signal strength of the home BS is reduced by an amount greater than the largest signal strength difference in the sub-group, and preferably equal to the mean of such largest signal strength difference, and the smallest signal strength difference of the remainder.

Further to avoid dropping users than cannot be handed over to another BS, a check is made on the lowest value of pilot signal strength of those users which are not candidate users, and if the proposed signal strength reduction is greater then the difference between this reduced level and the sensitivity of the respective user equipment (expressed in terms of pilot signal strength), then signal strength reduction is instead carried out on the basis of such difference.

Further, in an embodiment of the invention, if the load, or number of users, is less than a maximum value, a coverage hole metric is determined, such determined metric is compared with a threshold value, and transmission power of the base station is adjusted in dependence on the comparison.

An embodiment describes a distributed procedure to autonomously optimize the radio coverage of a small cell BS within a SCN, via adjustment of its pilot channel transmit power subject to a maximum transmit power constraint. It is applicable in any wireless cellular network which uses a pilot channel to define the coverage area.

The optimization objectives of the embodiment are threefold:

    1. To prevent BS overloading,
    2. To minimize radio coverage holes or gaps,
    3. To minimize the coverage overlap between neighboring BSs, i.e., to achieve objectives 1. and 2. with minimum pilot power possible.

Brief Description of the Drawings

An embodiment of the invention will now be described, by way of example only, with reference to the accompanying drawings, wherein:

Figure 1 is a diagram illustrating coverage areas of radio base stations; for explanation of the embodiment,
Figure 2 is a flow chart showing the procedure in accordance with the embodiment of the invention for coverage optimisation of a small cell base station; and
Figure 3 is a diagram illustrating elements of the base station of this embodiment and a flow chart of operation thereof.

Description of an Embodiment

The radio coverage optimization problem may comprise of many conflicting objectives, such as load balancing and coverage holes reduction, that are tuned by a single control parameter in the form of pilot channel transmit power. Therefore, these trade-offs need to be examined and balanced carefully to ensure a high-quality coverage optimization solution. Furthermore, owing to the increased number of base stations and consequent complexity of managing SCNs, there is an imperative need to develop decentralized optimization procedures, which is a highly challenging task as these procedures have to work without the global information and coordinated central control of network nodes. This is exemplified by the future small cell deployments, such as enterprise femtocells, which render traditional planning methods impractical and prohibitively expensive.

Cells are usually classified by cell radius and maximum output power as defined in 3GPP (TS25.104). Macrocells can be regarded as cells where the base station antenna is installed on a mast or a building above average roof top level. Microcells are cells whose antenna height is under average roof top level; they are typically used in urban areas. Picocells are small cells whose coverage diameter is a few dozen metres; they are mainly used indoors. Femtocells are cells designed for use primarily in residential or small business environments and connect to the service provider's network via a broadband internet connection. Umbrella cells are used to cover shadowed regions of smaller cells and fill in gaps in coverage between those cells. For the purposes of the present invention, "small cells" are regarded as cells which fall into one of the above categories, other than the category of macro cells.

Base Station Routers (BSR) are commonly designed for use with femtocells for example within the home. The Router is of a small size, for example a single large circuit board, and besides having the functionality of a base station, additionally includes network functions of Radio Network Control and core network router functionalities, so that the router can be connected to an existing network, without requiring any modification of the network.

This embodiment provides a novel distributed joint coverage optimization method, and necessitates the use of decentralized configuration procedures operational locally at the nodes and making use of the available local information. The use of such distributed procedures also helps in adapting the network nodes' behaviour to respective local conditions. This embodiment makes use of the local information available at the BS, such as the measurement reports communicated back by the connected mobile transceivers. In order to meet the specified objectives, the BS makes a local decision on whether to increase or decrease its pilot transmit power based on the defined procedures. In the case of BS overloading, the method uses UE measurement reports to precisely reduce BS's pilot power for dropping off exact number of extra users. Also, the method may increase the pilot transmit power to reduce coverage holes depending on the measured coverage holes metric and BS traffic load conditions.

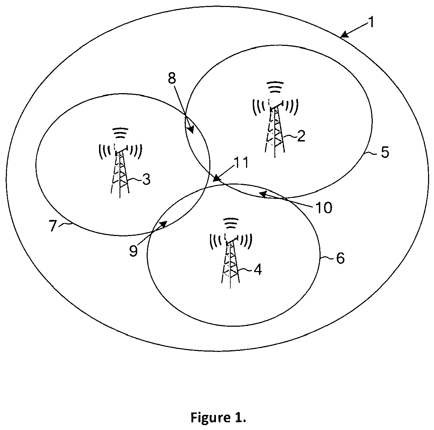

A wireless environment is considered that comprises of a cluster of radio BSs, jointly providing coverage in an intended geographical area. As generally the case with SCNs, underlay macro-cell coverage is assumed to cater for high-mobility users and provision of wide-area coverage. Figure 1 shows a wireless cellular network 1 with radio base stations 2, 3, 4. Each base station has a respective coverage area 5, 6, 7. A BS's coverage area is defined as the geographical region where its transmitted signal can be received by a mobile receiver at signal strength greater than some specified threshold. A coverage gap 11 represents the area where the received BS signal is below the specified threshold, whereas coverage overlaps 8, 9, 10 denote regions where coverage areas of two or more BSs overlap (for handover purposes). Each BS 2,3, 4 incorporates this embodiment of the invention, so as to provide a fully decentralized system.

Each BS stores thresholds for maximum pilot transmit power, which is fixed and depends upon how much of the total BS transmit power is allocated to the pilot channel by the network designer. Each small cell BS periodically gathers information from its connected users, and performs its radio coverage update based on the procedures described next. First, we describe the notations for different variables for each BS and then proceed to describe the two procedure update cycles.

Nomenclature:

$C$ - BS capacity (maximum number of simultaneous active users)
$\eta$ - mobile receiver's receiver sensitivity
$L_0$ - User load (number of active users (UE)) for the BS currently updating

$\tilde{L}_0$ - Number of users reporting received pilots from at least two BSs

$P_{tx}$ - BS pilot transmit power

$P_{tx,max}^{thr}$ - BS maximum pilot power threshold

$\xi$- Coverage holes metric, determined from call drop probability, handover rate, etc.

$\xi^{thr}$ - Threshold for the coverage holes metric $\xi$

$P_{rx}$- Received Pilot Signal Strength (*RPSS*) at the UE

$P_{rx}^{B}$ - Received Pilot Signal Strength at the UE from the best BS

$P_{rx}^{NB}$ - Received Pilot Signal Strength at the UE from the next best BS

$$P_{rx}^{diff} = P_{rx}^{B} - P_{rx}^{NB}$$

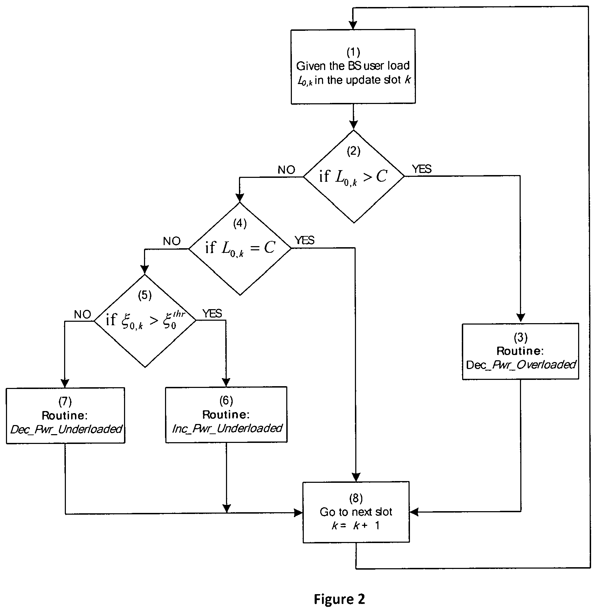

Figure 2 shows the procedure that a BS employs to adjust its coverage. In step (1), in update slot k of a time sequence of updates, the current user load $L_0$ of the BS is determined. In step (2), $L_0$ is compared against maximum allowable capacity C of the BS. If $L_0$ >C the BS is overloaded and it decreases as at (3) its pilot transmit power based on the *Dec_Pwr_Overloaded* procedure described later. The procedure then awaits the next update time slot k+1 (8).

If however in step (2), $L_0 \leq C$, then in step (4), if $L_0$=C, then no action is taken and the procedure goes direct to step (8), awaiting the next update slot.

If in step (4), $L_0$<C, then the BS is underloaded, and the pilot transmit power is adjusted to take account of coverage holes, as determined by a metric $\xi$, which is compared with a threshold value $\xi^{thr}$, as at (5). If the metric is greater than the threshold value, then in step (6), since the BS is underloaded and coverage hole metric exceeds the threshold, the pilot transmit power is increased by a fixed step size $P_{step}$ by means of the procedure: *Inc_Pwr_Underloaded* set out below, in order to reduce coverage holes. If the coverage hole metric $\xi$ is not greater than the threshold then, as at (7), it is possible to reduce BS transmit power to reduce coverage overlap, using the procedure *Dec_Pwr_Underloaded,* described below, the BS being underloaded and measured coverage hole metric $\xi$ being within the threshold $\xi^{thr}$ (7). However, if the BS is underloaded and coverage hole metric exceeds the threshold, the pilot transmit power is increased by a fixed step size $P_{step}$. Subsequent to steps (6) and (7), the procedure awaits the next update slot k+1, as at (8).

Procedure: *Dec Pwr Overloaded*

1. For each connected mobile receiver, calculate its

$P_{rx}^{diff}$

2. Sort, in ascending order, the above-calculated RPSS differences of all mobile receivers

3. Store the sorted $P_{rx}^{diff}$ in an arrays along with the corresponding UE IDs

4. Calculate the number of users to be dropped, i.e., $\lambda=\min(\tilde{L}_0,L_0\text{-}C)$

5. If ($\tilde{L}_0 \leq L_0\text{-}C$)

    a) Get the lowest $P_{rx}$ amongst all UEs except for the ones stored in $\Re$ , denoted by $\tilde{P}_{rx}$

    b) $P_{tx,update} = \Re(\lambda) + \Delta$

    c) If (($\tilde{P}_{rx}$-$P_{tx,update}$)<$\eta$)

$$P_{tx,update} = \tilde{P}_{rx} - \eta$$

    Else

    d) While $\left(\Re(\lambda) == \Re(\lambda+1)\right)$

$$\lambda = \lambda - 1$$

    e) Get the lowest $P_{rx}$ amongst all UEs except for the ones stored in $\Re$ from 1... $\lambda$, denoted by $\tilde{P}_{rx}$

    f) $P_{tx,update} = \text{MEAN}(\Re(\lambda), \Re(\lambda+1))$

    g) If (($\tilde{P}_{rx}$-$P_{tx,update}$)<$\eta$)

$$P_{tx,update} = \tilde{P}_{rx} - \eta$$

    End If

6. Adjust BS pilot power by $P_{tx} = P_{tx}\text{-}P_{tx,update}$

Explanation of Procedure: *Dec Pwr Overloaded*

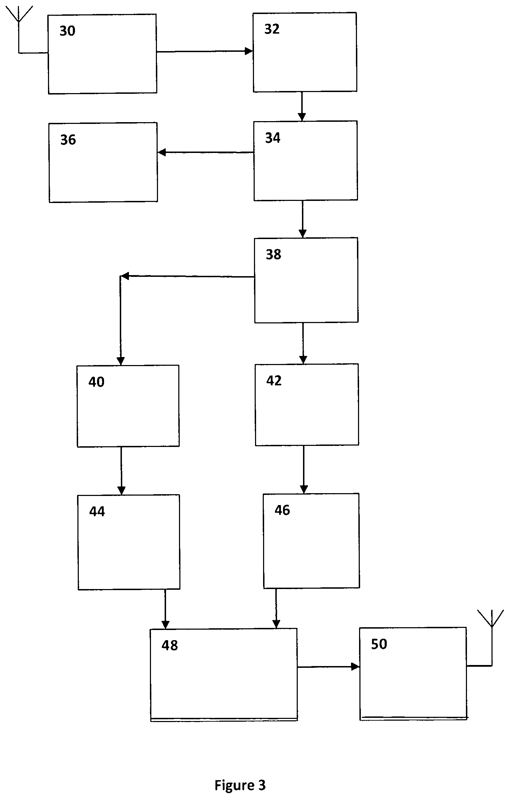

Step 1, in calculating signal strength differences, the BS determines a group of users that are candidates for handover. Referring to Figure 3, a receiver 30 of the base station provides signals for such calculation at 32 in a processor of the base station.

Steps 2 and 3 sort, as at 34, the group of such candidates into an array 36, stored in memory, which ranks the candidates such that the prime candidate for handover is the candidate with the smallest $P_{rx}^{diff}$

Step 4 (38) determines which is a minimum of the overload number of users and the number of candidates in the group for handover. If the candidate number is less than or equal to the overload number, then steps 5. a) to c) of the procedure are carried out as at 40, but if not, then steps 5. d) to g) are carried out as at 42.

In steps 5. a) to c), (40) the pilot power update is calculated on the basis of the signal strength difference R(λ) of the last candidate user in the array, that is candidate A. However if the update decrement would result in the user with the lowest received signal strength being dropped, then the update is changed as at 44 to $P_{tx,update} = \tilde{P}_{rx}-\eta$

In steps 5 d) to 5 g) (42) a pilot power update is calculated where there are more candidate users than are necessary to drop, the drop number A being equal to the overload number $L_0$-C. In this case, a sub-group is formed of the first A candidates in the group. A check is made of the signal strength difference R(λ+1) of the A+1 candidate, in the remainder of the group. If this is equal to R(λ) of the A-th candidate in the sub-group, then an update decrement cannot be based on R(A) (in contrast to steps 5a) to c)), since this will result in extra users being dropped. Hence A = A-1, the subgroup is reduced, and the excluded user added to the remainder, and a check is made with the next higher candidate in the array, until, as an iterative procedure, a signal strength difference is found which is different for two adjacent candidates in the array A, and A+1. At that point, the pilot power update is determined on the basis of the mean of the signal strength differences of the two adjacent candidates, so that candidate A in the sub-group is dropped, but not candidate λ+1 in the remainder. Again, as at 46 in Figure 3, if the update decrement would result in the user with the lowest received signal strength being dropped, then the increment is changed to $P_{tx,update} = \tilde{P}_{rx}-\eta$.

Finally, step 6, the resultant pilot transmission power update is provided as at 48, and the power of the transmitter 50 of the base station is adjusted.

1. Procedure: *Dec Pwr Underloaded* $P_{tx} = P_{tx}-\hat{P}_{step}$

This procedure is a straight forward decrement of pilot transmission power, for reduction of cell overlap

Procedure: *Inc Pwr Underloaded*

1. $P_{tx} = P_{tx} + P_{step}$
2. If $\left(P_{tx} > P_{tx,max}^{thr}\right)$

$$P_{tx} = P_{tx,max}^{thr}$$

This procedure represents an increase of pilot power transmission strength to reduce coverage holes, provided that the result does not exceed the permitted maximum. Note that the threshold decrement step size $\hat{P}_{step}$ should be set much lower than the increment step $P_{step}$ to ensure that the BS coverage decreases gradually, and the coverage is dominated by the increment step to compensate for coverage holes.

This embodiment of the invention:

- Allows automated radio coverage optimization of BSs, with little or no human intervention.
- Provides efficient radio resource usage by means of user load balancing amongst neighboring cells.
- Provides improved end-user experience via removal of coverage holes.
- Reduces interference to neighboring cells by minimizing coverage overlap.
- The fully decentralized approach to radio coverage optimization provides a scalable and automated solution in imminent large scale small cell wireless network deployments, where traditional coverage optimization approaches are impractical.

The description and drawings merely illustrate the principles of the invention. It will thus be appreciated that those skilled in the art will be able to devise various arrangements that, although not explicitly described or shown herein, embody the principles of the invention and are included within the scope of the claims. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of adjusting radio coverage of a cell of a mobile telecommunications system, said method being performed by a base station of said cell and comprising:

   determining the current number of users of a base station of the cell, and comparing said current number with a predetermined maximum value, said method being **characterized by**:

   determining, from signal reports from users to said base station, candidate users that may be dropped and handed over to a neighbouring cell, and if said current number is greater than said maximum value, adjusting transmission signal parameters of said base station by an amount dependent on signal reports made by said candidate users to said base station, wherein the step of adjusting comprises:

determining for each said candidate user the signal value difference between a signal value of the strongest received base station and the signal value of a weaker received base station, determining a number of users to be dropped as the minimum of a) the number of said candidate users and b) the difference between said current number and said maximum value, wherein if a) is the minimum, the base station reduces said transmission signal parameters by using a first amount dependent on the largest of said signal value differences of said candidate users, wherein if b) is the minimum, the base station determines, for a group defined by said candidate users, a sub-group within said group, said sub-group being equal or fewer in number than said minimum, such that the respective signal value differences of the users in the sub-group are less than the respective signal value differences of the remainder of said candidate users, and then reduces said transmission signal parameters by using a second amount dependent on the largest signal value difference in the resultant sub-group.

2. A method according to claim 1, wherein said second amount is equal to a mean of said largest said signal value difference in said sub-group and the smallest said signal value difference in said remainder.

3. A method according to claim 1 or 2, wherein the base station determines the lowest received signal strength of all users apart from said candidate users, and if said first or second amount implies that said lowest signal strength will be below the sensitivity of the user for signal reception, then reduces said transmission signal parameters by an amount dependent on the difference between said lowest signal strength and said sensitivity.

4. A method according to any preceding claim, wherein if said current number is less than said maximum value, then selectively reducing said transmission signal parameters, for reducing overlap with neighbouring cells, or increasing said transmission signal parameters, for reducing coverage holes, in dependence on a coverage metric representing coverage holes within said cell.

5. A method according to claim 4, wherein an increment of reduction is less than an increment of increase.

6. A method according to claim 1, wherein if b) is the minimum, the base station determines said sub-group, as follows:

a sub-group initially equal in number to the minimum is determined such that the users in said sub-group have signal value differences smaller than those of the remainder of said candidate users, provided that if the largest signal value difference of a user in said sub-group is the same as that of a user in said remainder, the number of users in said sub-group is progressively reduced and those excluded added to said remainder, until the largest signal value difference of a user in the sub-group is less than those of users in said remainder.

7. A base station for a cell of a mobile telecommunications system, wherein the base station includes means for adjusting radio coverage comprising: means for determining the current number of users of the base station, and comparing said current number with a predetermined maximum value, said base station being **characterized by** comprising:

means for determining, from signal reports from users to the base station, the candidate users that may be dropped and handed over to a neighbouring cell, and means for adjusting transmission signal parameters of the base station by an amount dependent on signal reports made by said candidate users to the base station, wherein said base station includes means for determining for each said candidate user the signal value difference between a signal value of the strongest received base station and a signal value of a weaker received base station, wherein the base station includes means for determining the number of users to be dropped as the minimum of a) the number of said candidate users and b) the difference between said current number and said maximum value, and wherein if a) is the minimum, the base station is operative to reduce said transmission signal parameters by using a first amount dependent on the largest of said signal value differences of said candidate users and wherein if b) is the minimum, the base station includes means for determining a sub-group of a group formed by said candidate users, said sub-group being equal or fewer in number than said minimum, such that the respective signal value differences of the users in the sub-group are less than the respective signal value differences of the remainder of said candidate users, and wherein the base station is operative to reduce said transmission signal parameters by using a second amount dependent on the largest signal value difference of said sub-group.

8. A base station according to claim 7, wherein the base station includes means for determining the lowest received signal strength of all users apart from said candidate users, and if said first or second amount implies that said lowest signal strength will be below the sensitivity of the user for signal reception, then the base station is operative to reduce said transmission signal parameters by an amount dependent on the difference between said lowest signal strength and said sensitivity.

9. A base station according to claim 7 or 8, wherein the base station includes means for selectively increasing or reducing transmission power parameters in dependence on a coverage metric representing coverage holes within said cell, preferably wherein an increment of reduction is less than an increment of increase, if said current number is less than said maximum value.

10. A method or base station according to any preceding claim, wherein said cell is a small cell, preferably a femtocell, and said base station is a base station router.

**Patentansprüche**

1. Verfahren zum Einstellen der Funkabdeckung einer Zelle eines Mobiltelekommunikationssystems, wobei das Verfahren von einer Basisstation der Zelle ausgeführt wird und Folgendes umfasst:

Bestimmen der aktuellen Anzahl von Benutzern einer Basisstation der Zelle und Vergleichen der aktuellen Anzahl mit einem vorbestimmten Maximalwert,
wobei das Verfahren **gekennzeichnet ist durch**:

Bestimmen von Kandidatenbenutzern, die abgezweigt und an eine Nachbarzelle übergeben werden können, aus Signalberichten von Benutzern an die Basisstation,
und dann, wenn die aktuelle Anzahl größer ist als der Maximalwert, Einstellen der Übertragungssignalparameter der Basisstation mit einem Wert in Abhängigkeit von den Signalberichten, die von den Kandidatenbenutzen an die Basisstation geliefert worden sind,

wobei der Schritt des Einstellens Folgendes aufweist:

- Bestimmen, für jeden Kandidatenbenutzer, der Signalwertdifferenz zwischen einem Signalwert der Basisstation mit dem stärksten Empfangssignal und dem Signalwert einer Basisstation mit einem schwächeren Empfangssignal,
- Bestimmen einer Anzahl von abzuzweigenden Benutzern als Minimalwert von a) der Anzahl der Kandidatenbenutzer und b) der Differenz zwischen der aktuellen Anzahl und dem Maximalwert,
- wobei dann, wenn a) der Minimalwert ist, die Basisstation die Übertragungssignalparameter unter Verwendung eines ersten Werts in Abhängigkeit von der größten der Signalwertdifferenzen der Kandidatenbenutzer verringert,
- wobei dann, wenn b) der Minimalwert ist, die Basisstation für eine **durch** die Kandidatenbenutzer definierte Gruppe eine Untergruppe in der Gruppe bestimmt, wobei die Untergruppe zahlenmäßig gleich dem oder kleiner als der Minimalwert ist, sodass die jeweiligen Signalwertdifferenzen der Benutzer in der Untergruppe kleiner sind als die jeweiligen Signalwertdifferenzen des Rests der Kandidatenbenutzer, und dann die Übertragungssignalparameter unter Verwendung eines zweiten Werts in Abhängigkeit von der größten Signalwertdifferenz in der resultierenden Untergruppe verringert.

2. Verfahren nach Anspruch 1, wobei der zweite Wert gleich einem Mittelwert der größten Signalwertdifferenz in der Untergruppe und der kleinsten Signalwertdifferenz im Rest ist.

3. Verfahren nach Anspruch 1 oder 2, wobei die Basisstation die niedrigste empfangene Signalstärke aller Benutzer mit Ausnahme der Kandidatenbenutzer bestimmt, und dann, wenn der erste oder der zweite Wert impliziert, dass die niedrigste Signalstärke unter der Empfindlichkeit des Benutzers für den Signalempfang liegt, dann die Übertragungssignalparameter um einen Wert in Abhängigkeit von der Differenz zwischen der niedrigsten Signalstärke und der Empfindlichkeit verringert.

4. Verfahren nach einem der vorhergehenden Ansprüche, wobei dann, wenn die aktuelle Anzahl kleiner ist als der Maximalwert, ein Verringern der Übertragungssignalparameter in ausgewählter Weise erfolgt, um die Überlappung mit Nachbarzellen zu verringern, oder ein Erhöhen der Übertragungssignalparameter erfolgt, um Funklöcher zu reduzieren, und zwar in Abhängigkeit von einer Abdeckungsmetrik, die die Funklöcher in der Zelle repräsentiert.

5. Verfahren nach Anspruch 4,
wobei ein Inkrement der Verringerung kleiner ist als ein Inkrement der Erhöhung.

6. Verfahren nach Anspruch 1,
wobei dann, wenn b) der Minimalwert ist, die Basisstation die Untergruppe wie folgt bestimmt:

eine Untergruppe, die anfangs zahlenmäßig gleich dem Minimalwert ist, wird so bestimmt, dass die Benutzer in der Untergruppe Signalwertdifferenzen aufweisen, die kleiner sind als die von dem Rest der Kandidatenbenutzer, und zwar unter der Voraussetzung, dass dann, wenn die größte Signalwertdifferenz eines Benutzers in der Untergruppe die gleiche wie die eines Benutzers in dem Rest ist, die Anzahl der Benutzer in der Untergruppe fortschreitend reduziert wird und die Ausgeschlossenen zu dem Rest hinzugefügt werden, bis die größte Signalwertdifferenz eines Benutzers in der Untergruppe kleiner ist als diejenigen der Benutzer in dem Rest.

7. Basisstation für eine Zelle eines Mobiltelekommunikationssystems, wobei die Basisstation Einrichtungen zum Einstellen der Funkabdeckung enthält, wobei die Basisstation Folgendes aufweist:

Einrichtungen zum Bestimmen der aktuellen Anzahl von Benutzern der Basisstation, und zum Vergleichen der aktuellen Anzahl mit einem bestimmten Maximalwert,
wobei die Basisstation **dadurch gekennzeichnet ist,**
**dass** sie Folgendes aufweist:
Einrichtungen zum Bestimmen der Kandidatenbenutzer, die abgezweigt und an eine Nachbarzelle übergeben werden können, aus Signalberichten von Benutzern an die Basisstation, und

- Einrichtungen zum Einstellen der Übertragungssignalparameter der Basisstation mit einem Wert in Abhängigkeit von den Signalberichten, die von den Kandidatenbenutzern an die Basisstation geliefert worden sind,
- wobei die Basisstation Einrichtungen zum Bestimmen, für jeden Kandidatenbenutzer, der Signalwertdifferenz zwischen einem Signalwert der Basisstation mit dem stärksten Empfangssignal und einem Signalwert einer Basisstation mit einem schwächeren Empfangssignal besitzt,
- wobei die Basisstation Einrichtungen zum Bestimmen der Anzahl von abzuzweigenden Benutzern als Minimalwert von a) der Anzahl der Kandidatenbenutzer und b) der Differenz zwischen der aktuellen Anzahl und dem Maximalwert enthält, und wobei dann, wenn a) der Minimalwert ist, die Basisstation betriebsfähig ist, um die Übertragungssignalparameter unter Verwendung eines ersten Werts in Abhängigkeit von der größten der Signalwertdifferenzen der Kandidatenbenutzer zu reduzieren, und wobei dann, wenn b) der Minimalwert ist, die Basisstation Einrichtungen besitzt, um eine durch die Kandidatenbenutzer gebildete Untergruppe einer Gruppe zu bestimmen, wobei die Untergruppe zahlenmäßig gleich dem oder kleiner als der Minimalwert ist, sodass die jeweiligen Signalwertdifferenzen der Benutzer in der Untergruppe kleiner sind als die jeweiligen Signalwertdifferenzen von dem Rest der Kandidatenbenutzer, und wobei die Basisstation betriebsfähig ist, um die Übertragungssignalparameter durch Verwenden eines zweiten Werts in Abhängigkeit von der größten Signalwertdifferenz der Untergruppe zu reduzieren.

8. Basisstation nach Anspruch 7,
wobei die Basisstation Einrichtungen zum Bestimmen der niedrigsten empfangenen Signalstärke von allen Benutzern mit Ausnahme der Kandidatenbenutzer besitzt, und dann, wenn der erste oder der zweite Wert impliziert, dass die niedrigste Signalstärke unter der Empfindlichkeit des Benutzers für den Signalempfang liegt, die Basis dann betriebsfähig ist, um die Übertragungssignalparameter um einen Wert in Abhängigkeit von der Differenz zwischen der niedrigsten Signalstärke und der Empfindlichkeit zu reduzieren.

9. Basisstation nach Anspruch 7 oder 8,
wobei die Basisstation Einrichtungen zum selektiven Erhöhen oder Verringern der Übertragungsleistungsparameter in Abhängigkeit von einer Abdeckungsmetrik enthält, die die Funklöcher in der Zelle repräsentiert, wobei vorzugsweise ein Inkrement der Verringerung kleiner ist als ein Inkrement der Erhöhung, wenn die aktuelle Anzahl kleiner ist als der Maximalwert.

10. Verfahren oder Basisstation nach einem der vorhergehenden Ansprüche,
wobei die Zelle eine kleine Zelle ist, vorzugsweise eine Femtozelle, und wobei die Basisstation ein Basisstation-Router ist.

**Revendications**

1. Procédé d'ajustage de couverture radio d'une cellule d'un système de télécommunications mobiles, ledit procédé étant effectué par une station de base de ladite cellule, comprenant :

le calcul du nombre actuel d'utilisateurs d'une station de base de la cellule, et la comparaison dudit nombre actuel avec une valeur maximale prédéterminée,
ledit procédé étant **caractérisé en ce que** :

à partir de rapports de signal en provenance d'utilisateurs vers ladite station de base, l'évaluation d'utilisateurs candidats pouvant être ôtés et transférés à une cellule voisine ;
si le nombre actuel est supérieur à ladite valeur maximale, l'ajustement des paramètres de transmission de signal de ladite station de base d'une valeur dépendante des rapports de signal effectués par lesdits utilisateurs candidats à ladite station de base, selon lequel l'étape d'ajustement comprend :

l'évaluation, pour chaque utilisateur candidat, de la différence de valeur de signal entre une valeur de signal reçue de la station de base la plus forte et la valeur de signal reçue d'une station de base moins forte ;
l'évaluation du nombre d'utilisateurs à ôter représentant la valeur minimale parmi (a) le nombre d'utilisateurs candidats, et (b) la différence entre le nombre actuel et la valeur maximale ;
selon laquelle si (a) est la valeur minimale, la station de base réduit lesdits paramètres de transmission de signal par le biais d'une première valeur dépendante de la valeur la plus importante parmi lesdites différences de valeur desdits utilisateurs candidats ;
selon laquelle si (b) est la valeur minimale, la station de base calcule, pour un groupe défini par lesdits utilisateurs candidats, un sous-groupe à l'intérieur dudit groupe, ledit sous-groupe comportant un nombre inférieur ou égal à ladite valeur minimale, de telle sorte que les différences de valeurs de signal respectives des utilisateurs du sous-groupe sont moins importantes que les différences de valeurs de signal respectives des utilisateurs candidats restants, et la station de base réduit alors lesdits paramètres de transmission de signal par le biais d'une deuxième valeur dépendante de la valeur la plus importante parmi lesdites différences de valeur de signal du sous-groupe résultant.

2. Procédé selon la revendication 1, selon lequel ladite deuxième valeur est égale à une moyenne de ladite valeur la plus importante parmi lesdites différences de valeur dudit sous-groupe et la valeur la moins importante parmi lesdites différences de valeur du groupe restant.

3. Procédé selon la revendication 1 ou la revendication 2, selon lequel la station de base évalue la valeur de force de signal reçue la moins importante de tous les utilisateurs à part lesdits utilisateurs candidats, et si ladite première ou deuxième valeur implique que la valeur de force de signal la moins importante sera en-dessous du seuil de détection de l'utilisateur pour pouvoir recevoir du signal, alors la station de base réduit lesdits paramètres de transmission de signal par une valeur dépendante de la différence entre ladite valeur de force de signal la moins importante et ledit seuil de détection.

4. Procédé selon l'une quelconque des revendications précédentes, selon lequel si le nombre actuel est inférieur à ladite valeur maximale, alors on réduit de manière sélective lesdits paramètres de transmission de signal, afin de réduire le chevauchement avec des cellules voisines, ou on augmente de manière sélective lesdits paramètres de transmission de signal, afin de réduire les trous de couverture, en fonction d'une mesure de couverture représentant des trous de couverture au sein d'une cellule.

5. Procédé selon la revendication 4, selon lequel un incrément de réduction est inférieur à un incrément d'augmentation.

6. Procédé selon la revendication 1, selon lequel si (b) est la valeur minimale, la station de base calcule le sous-groupe de la manière suivante :
un sous-groupe qui est initialement égal en nombre à la valeur minimale est calculé de sorte que les utilisateurs dudit sous-groupe présentent des différences de valeur de signal moins importantes que celles du groupe restant d'utilisateurs candidats, sous réserve que si la valeur la plus importante de différences de valeur de signal d'un utilisateur dudit sous-groupe est identique à celle d'un utilisateur du groupe restant, on réduit progressivement le nombre d'utilisateurs dudit sous-groupe et ceux qui en sont exclus sont ajoutés au groupe restant, jusqu'à ce que la valeur la plus importante des différences de valeur de signal d'un utilisateur du sous-groupe soit inférieure à celles des utilisateurs du groupe restant.

7. Station de base pour une cellule de système de télécommunications mobiles, selon laquelle la station de base comporte des moyens d'ajustage de la couverture radio comprenant :

des moyens pour calculer le nombre actuel d'utilisateurs de la station de base, et pour comparer ledit nombre actuel avec une valeur maximale prédéterminée ;

ladite station de base étant **caractérisée en ce qu'**elle comprend :

des moyens d'évaluation, à partir de rapports de signal en provenance d'utilisateurs vers ladite station de base, des utilisateurs candidats pouvant être ôtés et transférés à une cellule voisine ;

des moyens d'ajustage des paramètres de transmission de signal de la station de base par une valeur dépendante des rapports de signaux effectués par lesdits utilisateurs candidats à la station de base ;

selon laquelle la station de base comporte des moyens d'évaluation, pour chaque utilisateur candidat, de la différence de valeur de signal entre une valeur de signal reçue de la station de base la plus forte et la valeur de signal reçue d'une station de base moins forte ;

selon laquelle la station de base comporte des moyens d'évaluation du nombre d'utilisateurs à ôter représentant la valeur minimale parmi (a) le nombre d'utilisateurs candidats, et (b) la différence entre le nombre actuel et ladite valeur maximale ; et

selon laquelle si (a) est la valeur minimale, la station de base est configurée pour réduire lesdits paramètres de transmission de signal par le biais d'une première valeur dépendante de la valeur la plus importante parmi lesdites différences de valeur desdits utilisateurs candidats ; et

selon laquelle si (b) est la valeur minimale, la station de base comporte des moyens de calcul d'un sous-groupe dans un groupe défini par lesdits utilisateurs candidats, ledit sous-groupe comportant un nombre inférieur ou égal à ladite valeur minimale, de telle sorte que les différences de valeurs de signal respectives des utilisateurs du sous-groupe sont moins importantes que les différences de valeurs de signal respectives des utilisateurs candidats restants, et

selon laquelle la station de base est configurée pour réduire alors lesdits paramètres de transmission de signal par le biais d'une deuxième valeur dépendante de la valeur la plus importante parmi les différences de valeur dudit sous-groupe.

8. Station de base selon la revendication 7, selon laquelle la station de base comporte des moyens d'évaluation de la valeur de force de signal reçue la moins importante de tous les utilisateurs à part lesdits utilisateurs candidats, et si ladite première ou deuxième valeur implique que la valeur de force de signal la moins importante sera en-dessous du seuil de détection de l'utilisateur pour pouvoir recevoir du signal, alors la station de base est configurée pour réduire lesdits paramètres de transmission de signal par une valeur dépendante de la différence entre ladite valeur de force de signal la moins importante et ledit seuil de détection.

9. Station de base selon la revendication 7 ou la revendication 8, selon laquelle la station de base comporte des moyens d'augmentation sélective ou de réduction sélective les paramètres de transmission de signal en fonction d'une mesure de couverture représentant des trous de couverture au sein d'une cellule, de préférence selon laquelle un incrément de réduction est inférieur à un incrément d'augmentation si le nombre actuel est inférieur à ladite valeur maximale.

10. Station de base selon l'une quelconque des revendications précédentes, selon laquelle la cellule est une petite cellule, de préférence une femtocellule, et ladite station de base est un routeur de station de base.

**Figure 1.**

**(1)**
Given the BS user load
$L_{0,k}$ in the update slot $k$

**(2)**
NO ← if $L_{0,k} > C$ → YES

**(4)**
NO ← if $L_{0,k} = C$ → YES

**(5)**
NO ← if $\xi_{0,k} > \xi_0^{thr}$ → YES

**(3)**
Routine:
*Dec_Pwr_Overloaded*

**(7)**
Routine:
*Dec_Pwr_Underloaded*

**(6)**
Routine:
*Inc_Pwr_Underloaded*

**(8)**
Go to next slot
$k = k + 1$

**Figure 2**

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0072618 A

**Non-patent literature cited in the description**

- **D. FAGEN ; P.A. VICHARELLI ; J. WEITZEN.** Automated Wireless Coverage Optimization With Controlled Overlap. *IEEE Transactions on Vehicular Technology,* July 2008, vol. 57 (4), 2395-2403

- **I. SIOMINA ; P. VÄRBRAND ; D. YUAN.** Automated Optimization of Service Coverage and Base Station Antenna Configuration in UMTS Networks. *IEEE Wireless Communications,* December 2006, vol. 13 (6), 16-25
- **H. CLAUSSEN ; L.T.W. HO.** Distributed Radio Coverage Optimization in Enterprise Femtocell Networks. *Proc. IEEE ICC,* 23 May 2010